(19) Europäisches Patentamt
European Patent Office
Office européen des brevets

(11) **EP 3 389 157 B1**

(12) **EUROPEAN PATENT SPECIFICATION**

(45) Date of publication and mention
of the grant of the patent:
**01.01.2020 Bulletin 2020/01**

(51) Int Cl.:
*H02H 9/08* *(2006.01)*      *H02H 3/08* *(2006.01)*
*H02H 3/16* *(2006.01)*      *H02H 3/33* *(2006.01)*

(21) Application number: **17460020.5**

(22) Date of filing: **10.04.2017**

(54) **METHOD FOR IMPROVEMENT OF EARTH-FAULT PROTECTION IN COMPENSATED MV NETWORKS**

VERFAHREN ZUR VERBESSERUNG VON ERDKURZSCHLUSSSCHUTZ IN KOMPENSIERTEN MV-NETZWERKEN

PROCÉDÉ D'AMÉLIORATION DE LA PROTECTION CONTRE LES DÉFAUTS DE TERRE DANS DES RÉSEAUX MV COMPENSÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.10.2018 Bulletin 2018/42**

(73) Proprietor: **ABB Schweiz AG**
**5400 Baden (CH)**

(72) Inventors:
• **Zubic, Sinisa**
**30-019 Krakow (PL)**

• **Burek, Arkadiusz**
**32-020 Wieliczka (PL)**

(74) Representative: **Wroblewski, Marcin Jan**
**Jvwf Rzecznicy Patentowi Marcin Wroblewscy**
**Swierkowa 18**
**95-083 Florentynow (PL)**

(56) References cited:
WO-A1-2014/194941      WO-A2-96/34293
DE-A1- 19 525 417      DE-A1- 19 837 933

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a method for improvement of earth-fault protection in compensated MV networks, used in order to prevent exposing people to dangerous voltages and development of earth-faults to the phase-to-phase faults. More detailed the method is designed for MV network grounded through the Petersen-coil device and equipped with at least one of intelligent electronic devices IEDs as a protection device for power lines.

## Background of the invention

The medium-voltage networks are in some countries grounded via Petersen-coil in order to compensate the network's capacitive currents during the earth-faults. The compensation limits the earth-fault currents which are not sufficient to maintain the arc and some faults are distinguishing without need to disconnect the customers from power supply.

The network is compensated via Petersen-coil installed at the grounding point of supplying transformer. The Petersen-coil controller is monitoring the network compensation level and in case of any change, the controller changes the Petersen-coil inductance till the required compensation level is achieved. The Petersen-coil controller is a device that works independently of devices that are performing the earth-fault protection in the network (intelligent electronic devices IEDs).

One of the most challenging tasks in compensated medium-voltage networks is high-ohmic earth-fault detection. Traditionally, at each power line (cable or overhead line that connects the substation to the customers) is installed an IED that receives voltage and current measurements and starts earth-fault protection function when predefined residual voltage threshold $U_{0TH}$ is exceeded. The threshold value $U_{0TH}$ needs to be higher than network's natural (healthy state) residual voltage, which depends on power line asymmetries, state of power line circuit breakers, compensation degree etc. For this reason the residual voltage threshold ($U_{0TH}$) is selected to be above the highest expected value of the network's healthy state residual voltage and it does not adjust according to the state of the network. In some cases, due to lack of knowledge of network's healthy state residual voltage, a high value of threshold is selected and used as a constant value for different medium-voltage networks. The consequence of high threshold values is that the earth-fault protection is able to detect only low-ohmic earth-faults, since for higher-ohmic earth-faults the residual voltage would not exceed the threshold $U_{0TH}$.

The earth-fault protection would be more sensitive, which means to be able to detect higher-ohmic earth-faults, if the threshold is set above, but closer to the maximum possible residual voltage for a give network state. The Petersen-coil controller estimates the network's maximum residual voltage in each state, but this information is not available at IEDs, which are usually set at constant threshold.

## Prior art

The prior art is mainly referring to the tuning techniques of Petersen-coil, which does not influence the earth-fault protection settings, since there is no communication between the Petersen-coil controller and protection devices. From the patent EP0823057 there is known a method for the tuning of the arc suppression coil. From the other patent application WO2014021773 there is known an another type of solutions which includes an additional device that injects currents into the grounding point of the network in order to detects the faulty power line and improve protection sensitivity. The drawback of this solution is that it requires additional hardware for current injection as well as measurements from all power lines.

From patent application WO 96/34293 which forms the preamble of claim 1, there is known a process for monitoring a three-phase mains for a change in the tuning of the arc suppression coil in which the neutral point shift voltage arising at the arc suppression coil is continuously measured and compared with a tolerance range. The tuning of the arc suppression coil is the only purpose of the invention, hence the operation of earth-fault protection in the network is not considered nor improved

From patent application WO 2014/194941 there is known a method of detection of ground faults in energy supply networks with a compensated star point. The solution uses a grounding device which is temporarily connected to the star point of the energy supply network. A ground fault is detected if the residual voltage exceeds a specified threshold and the admittance variable exceeds a specified admittance threshold. In this invention earth-fault protection sensitivity depends on a specified residual voltage threshold which is not consider to be adjustable in real time for maximum protection sensitivity.

## The summary of the invention

The invention is defined by the independent claims.

An essence of the invented method is that the method comprises the step of a determination a residual voltage threshold $U_{0TH1}$ for earth-fault protection function of IEDs of the MV network which is calculated according to the formula:

$$U_{0TH1} = U_{0MAX1} + \Delta U,$$

where:

$U_{0MAX1}$ represents an estimated maximum residual voltage value for a given network state,

$\Delta U$ represents a security margin in percentages selected by the user,

and the method has a step of comparison of the residual voltage threshold $U_{0TH1}$ with a value of minimal residual voltage threshold $U_{THMIN}$, defined by the user, and according to the result of the comparison a final threshold $U_{FINAL}$ for earth-fault protection in IED's ($6_1....6_n$) is determining for the larger of two values $U_{0TH1}$ or $U_{THMIN}$.

Preferably a communication signal informing about the value of the final threshold $U_{FINAL}$ is sent via a communication network to the IEDs.

Alternatively a communication signal informing about the value of maximum residual voltage $U_{0MAX1}$ is sent via a communication network to the IEDs where the final threshold $U_{FINAL}$ for earth-fault protection in IEDs is calculated.

Preferably the step of calculating the final threshold $U_{FINAL}$ for earth-fault protection in IEDs is performed in a central protection unit.

Preferably the security margins $\Delta U$ are recommended for different types of network and final selection of $\Delta U$ values is determined by the users.

The essence of a computer program product comprising computer-readable program code which when executed on a computer device being a Petersen-coil controller or a central protection unit or IEDs, which carried out the steps of improvement of earth-fault protection in compensated MV networks comprises the following steps:

the step of measuring an input residual voltage signals $U_0$ delivered to a Petersen-coil controller,

the step of detecting a state of the network using a resonance curve R, being a function of a compensation level *K*, given by the user, and the input residual voltage signal $U_0$,

the step of a determination a residual voltage threshold $U_{0TH1}$ for earth-fault protection function of IEDs of the network which is calculated according to the formula:

$$U_{0TH1} = U_{0MAX1} + \Delta U,$$

where:

$U_{0MAX1}$ represents an estimated maximum residual voltage value for a given network state,

$\Delta U$ represents a security margin in percentages selected by the user, the step of comparison of the residual voltage threshold $U_{0TH1}$ with a value of minimal residual voltage threshold $U_{THMIN}$, defined by the user,

the step of determination a final threshold $U_{FINAL}$ for earth-fault protection in IED's for the larger of two values $U_{0TH1}$ or $U_{THMIN}$.

The advantage of the method according to the invention is to overcome the problem of insufficient earth-fault protection sensitivity for higher-ohmic earth-faults, due to constant residual voltage threshold. The present invention is based on real-time adjustment of residual voltage threshold, which is utilized via communication network between the Petersen-coil controller and IEDs. The basic functionality of Petersen-coil controller includes estimation of the maximum residual voltage in each network state. This information is shared with IEDs via a communication network in order to achieve a dynamic change of earth-fault protection thresholds and better sensitivity for high-ohmic faults.

The method according to the invention can be used in any type of compensated network with any type of power lines (overhead lines, cables) and different voltage levels (10kV, 20kV...). It does not depend on the type of implemented earth-fault protection at IEDs, as long as it uses the residual voltage threshold as a start for the earth-fault protection function. It does not depend on the type of the main control technique of Petersen-coil, as long as it estimates the residual voltage in the resonant state of compensation. It only requires the communication network between the controller and IEDs and a module for real-time calculation of an optimal residual voltage threshold $U_{0TH1}$, which could be a part of Petersen-coil controller or IEDs.

**Technical description**

The method according to the invention is explained in an embodiment shown in the drawing, where:

Fig.1 presents a single-line diagram of a distribution network compensated by a Petersen-coil,

Fig.2 presents a flowchart of the improved earth-fault protection method according to the first embodiment of the invention,

Fig.3 presents a flowchart of the improved earth-fault protection method according to the second embodiment of the invention,

Fig.4 presents a diagram of the change of the state of distribution network.

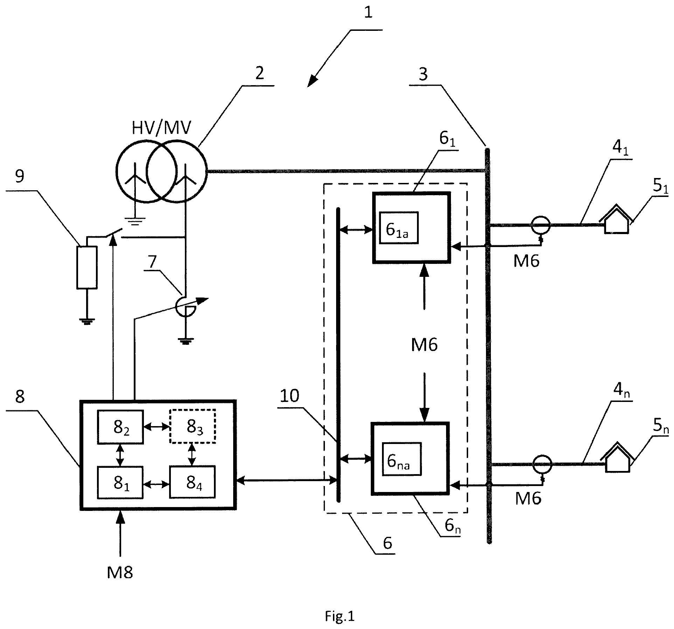

In Fig. 1 there is shown a single line diagram of a distribution network 1 that is supplied from an energy source 2, in the form of HV/MV transformer, electrically connected with a busbar 3 which is connected with at least one of $4_1$ to $4_n$ power lines, where n is a natural number. The power line further supplies energy to the end customers $5_1....5_n$. The solution is applicable to any number of sources, any number of power lines, switchgear type or busbar arrangement. The power lines are protected by intelligent electronic devices, IEDs $6_1...6_n$,

but they could be protected by using one central protection device 6, what is indicated in the drawings by dashed line. The IEDs require measurements M6 of voltage and current signals from protected power line. The network 1 is grounded through the Petersen-coil device 7, which is controlled by Petersen-coil controller 8 in order to maintain the required level of network compensation. The grounding resistance 9 is connected in order to increase the resistive part of fault current and allows reliable detection of earth-faults. The controller 8 is a computer device with a processor which comprises some functional modules for control the Petersen-coil inductance device 7:

$8_1$ - the module for preprocessing the measured input signals M8. The required signal is an input residual voltage $U_0$, but depending on implemented functions it is adapted to receive additional signals from other parts of the network 1,

$8_2$ - the module that controls the Petersen-coil 7 and grounding resistance 9 and is adapted to estimate a resonance curve being a function $f(U_o, K)$ in order to determine and maintain the required network compensation level $K$;

$8_3$ - in the first embodiment of the invention, $8_3$ is the module for real-time adjustment of a residual voltage threshold $U_{0TH}$, for the earth-fault protection function implemented at IEDs. In the second embodiment of the invention the module $8_3$ does not exist, what is presented in dotted line, since the residual voltage threshold $U_{0TH}$ is adjusted at IEDs;

$8_4$ - the communication module that sends the information to IEDs via the communication network.

The control device 8 comprises also other modules what is nor presented in the drawing but the modules are implemented in the processor of the control computer device 8.

In the network 1 between the IEDs $6_1...6_n$ and a controller 8 a communication network 10 is installed, which is connected with a controller communication module $8_4$, implemented in the controller 8 and with communication modules $6_{1a} ... 6_{na}$, implemented in the electronic devices IEDs $6_1...6_n$.

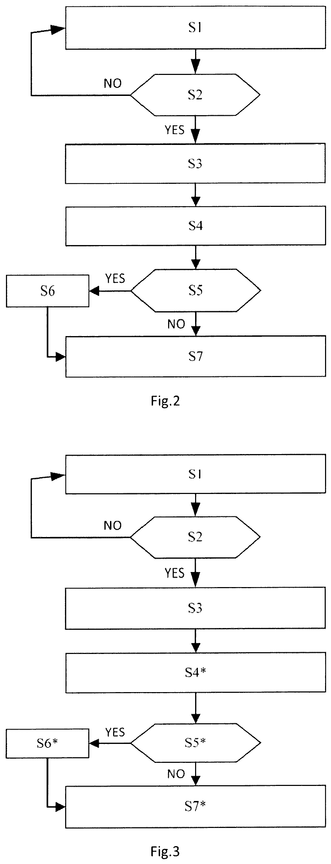

A method according to the first embodiment of the invention is realized in the following steps, according to the Fig. 2:

Step S1

In the step S1 the measured input signals M8 are acquired, preprocessed and prepared in the controller 8 for usage in the next steps. It is required to measure at least a residual voltage $U_0$, (what could be measured at 7 or at other places in network 1) and estimate the magnitude of the residual voltage $U_0$.

Step S2

In the step S2 the state of the network is examined in the controller 8. The measured signals M8 are compared to predefined thresholds, given by the user or on the basis of the previous measured values of M8, in order to detect if the state of the network 1 has changed. The detection of the state of the network is well known for skill in the art so there is no need to explain such process in detail. If the state of the network has changed (YES), then the next steps are executed, otherwise the steps S1 and S2 are executed again.

Step S3

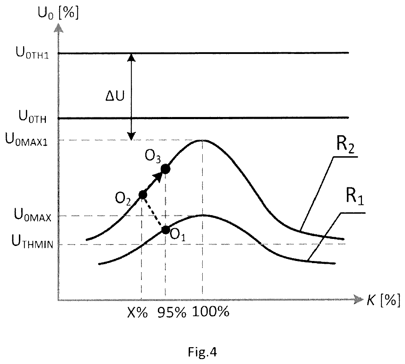

In the step S3 the controller 8 controls a Petersen-coil inductance in the device 7 and changes its value in order to maintain a required compensation level $K$, given by the user. In Fig. 4 is shown an example of this process. There are two resonance curves R1 and R2 as a functions $f(U_o, K)$. The network 1 changed the state in step S2 in which the operating point was $O_1$ indicated on the resonance curve $R_1$. The maximum value on the curve R1 was indicated as $U_{0MAX}$ and it was determined for the compensation level $K$ having value of 100%, while for earth-fault protection a residual voltage threshold was indicated as $U_{0TH}$. In the new state the network operating point is $O_2$, on the resonance curve $R_2$, and the compensation level $K$ having a value X is different from the required 95%. The controller 8 changes the Petersen-coil inductance in the device 7, in order to maintain a required compensation level $K$ as 95% and the operating point moves from $O_2$ to the point $O_3$ on the resonance curve $R_2$. In that process the resonant curve $R_2$, which represents the residual voltage $U_0$ as a function of compensation level $K$ of the network, is calculated in module $8_2$. For the resonance curve R2, a new value of a maximum residual voltage $U_{0MAX1}$ for a new state of the network is determined. The residual voltage is given in form of relative values to the nominal phase voltage.

Step S4

In the step S4 a residual voltage threshold $U_{0TH1}$ for a given network state is determined according to the formula:

$$U_{0TH1} = U_{0MAX1} + \Delta U,$$

where:

- $U_{0MAX1}$ represents the estimated maximum residual voltage value for a given network state,
- $\Delta U$ represents the security margin in order to distinguish the healthy and the fault state of the network.

The $\Delta U$ depends on many factors and it is given in form of recommendations for different types of networks. The user choose the set of values and limits appropriate for their network and local regulations. The $\Delta U$ value is result of deep investigation of distribution networks. It depends on type of power lines (cables, overhead lines), the overhead line geometry, the level of asymmetry and its share in the network.

Step S5

In the step S5 the residual voltage threshold $U_{0TH1}$ is compared to a minimal allowed voltage value $U_{THMIN}$ defined by the user. If $U_{0TH1} < U_{THMIN}$ then the next step S6 is performed. If

$$U_{0TH1} \geq U_{THMIN},$$

what means that the residual voltage threshold $U_{0TH1}$ exceeds, or it is equal to the minimum required value $U_{THMIN}$, and it is used as a final residual voltage threshold $U_{FINAL} = U_{0TH1}$.

Step S6

In the step S6 the final residual voltage threshold $U_{FINAL}$ for earth-fault protection in IED's ($6_1....6_n$) is set to the minimum value allowed by the user $U_{THMIN}$:

$$U_{FINAL} = U_{THMIN}.$$

Step S7

In the step S7 the communication module $8_4$ is sending an information about the final value of residual voltage threshold $U_{FINAL}$ to the communication modules $6_{1a}..6_{na}$ via communication network 10. The IEDs $6_1..6_n$ are taking $U_{FINAL}$ as a new threshold for starting the earth-fault protection. The earth-fault protection sensitivity is improved, since it is adjusted to the current network state, which leads to detection of higher-ohmic earth-faults.

The measured data M6 of voltage and current signals from protected power lines are received in the IEDs. If the residual voltage $U_0$ in the network 1 exceed the value of residual voltage threshold $U_{FINAL}$, the earth-fault protection function implemented in IEDs are executed and faulty power line is disconnected from the network 1.

A method according to the second embodiment of the invention is realized in the following steps, according to the Fig. 3:

Step S1 is the same as in the first embodiment of the invention.

Step S2 is the same as in the first embodiment of the invention.

Step S3 is the same as in the first embodiment of the invention.

Step S4*

In the step S4* the communication module $8_4$ is sending an information about the new value of a maximum residual voltage $U_{0MAX1}$ to the communication modules $6_{1a}..6_{na}$ via communication network 10.

The main difference between two embodiments of the invention is that the threshold is determined in IEDs ($6_1..6_n$ or 6), instead in the controller 8.

Step S5* is the same as the S5 in the first embodiment of the invention, but it is performed in the IEDs ($6_1..6_n$ or 6).

Step S6* is the same as the S6 in the first embodiment of the invention, but it is performed in the IEDs ($6_1..6_n$ or 6).

Step S7*

The IEDs $6_1..6_n$ are taking $U_{FINAL}$ as a new threshold for starting the earth-fault protection. The earth-fault protection sensitivity is improved, since it is adjusted to the current network state, which leads to detection of higher-ohmic earth-faults.

**Claims**

1. A method for improvement of earth-fault protection in compensated MV networks (1) grounded through the Petersen-coil device (7) and equipped with at least one of intelligent electronic devices IEDs ($6_1...6_n$) as a protection device for power lines ($4_1 .... 4_n$), comprises the step of measuring (M8) an input residual voltage signal $U_0$ delivered to a Petersen-coil controller (8), having the step of detecting a state of the network (1) using a resonance curve (R), being a function of a compensation level ($K$), given by the user, and the input residual voltage signal $U_0$, **characterized in that** the method further comprises the step of a determination a residual voltage threshold $U_{0TH1}$ for earth-fault protection function of IED's ($6_1....6_n$) of the network (1) which is calculated according to the formula:

$$U_{0TH1} = U_{0MAX1} + \Delta U,$$

where:

- $U_{0MAX1}$ represents an estimated maximum residual voltage value for a given network state,
- $\Delta U$ represents a security margin in percentages selected by the user,

and next a step of comparison of the residual voltage threshold $U_{0TH1}$ with a value of minimal residual voltage threshold $U_{THMIN}$, defined by the user, is performed and according to the result of the comparison a final threshold $U_{FINAL}$ for earth-fault protection in IED's ($6_1....6_n$) is determining for the larger of two values $U_{0TH1}$ or $U_{THMIN}$.

2. The method according to claim 1, **characterizing in that** a communication signal informing about the value of the final threshold $U_{FINAL}$ for earth-fault protection in IED's ($6_1....6_n$) is sent from the controller (8) via a communication network (10) to the IED's ($6_1....6_n$) and if the residual voltage in the network (1) exceeds the value $U_{FINAL}$, the earth-fault protection function implemented in IEDs($6_1....6_n$) are executed and faulty power line of the lines ($4_1 .... 4_n$) is disconnected from the network (1).

3. The method according to claim 1, **characterizing in that** a communication signal informing about the value of maximum residual voltage $U_{0MAX1}$ is sent via a communication network (10) to the IED's ($6_1....6_n$, or 6) where the final threshold $U_{FINAL}$ for earth-fault protection in IED's ($6_1....6_n$) is calculated and if the residual voltage in the network (1) exceeds the value $U_{FINAL}$, the earth-fault protection function implemented in IEDs are executed and faulty power line of the lines ($4_1 .... 4_n$) is disconnected from the network (1).

4. The method according to claim 3, **characterizing in that** the step of calculating the final threshold $U_{FINAL}$ for earth-fault protection is performed in a central protection unit (6).

5. The Method according to any previous claims, **characterized in that** the security margins $\Delta U$ are recommended for different types of network (1) and final selection of $\Delta U$ values is determined by the users.

6. A computer program product comprising computer-readable program code which when executed on a computer device being a Petersen-coil controller (8) or in central protection unit (6) or in IED's ($6_1....6_n$) for power lines ($4_1 .... 4_n$), carried out the steps of improvement of earth-fault protection in compensated MV networks (1), where the network (1) is grounded through the Petersen-coil device (7) and equipped with at least one of intelligent electronic devices IEDs ($6_1...6_n$) as a protection device for power lines ($4_1 .... 4_n$), comprises the following steps:

- the step of measuring (M8) an input residual voltage signals $U_0$ delivered to a Petersen-coil controller (8),
- the step of detecting a state of the network (1) using a resonance curve (R), being a function of a compensation level (K), given by the user, and an input residual voltage signal {$U_0$},
- the step of a determination a residual voltage threshold $U_{0TH1}$ for earth-fault protection function of IED's ($6_1....6_n$) of the network (1) which is calculated according to the formula:

$$U_{0TH1} = U_{0MAX1} + \Delta U,$$

where;

$U_{0MAX1}$ represents an estimated maximum residual voltage value for a given network state,
$\Delta U$ represents a security margin in percentages selected by the user,

- the step of comparison of the residual voltage threshold $U_{0TH1}$ with a value of minimal residual voltage threshold $U_{THMIN}$, defined by the user,
- the step of determination a final threshold $U_{FINAL}$ for earth-fault protection in IED's ($6_1....6_n$) for the larger of two values $U_{0TH1}$ or $U_{THMIN}$.

**Patentansprüche**

1. Ein Verfahren zur Verbesserung des Erdschlussschutzes in kompensierten Mittelspannungsnetzen (1), die durch die Petersen-Spulenvorrichtung (7) geerdet und mit mindestens einer der intelligenten elektronischen Vorrichtungen IED ($6_1...6_n$) als Schutzvorrichtung für Stromleitungen ($4_1...4_n$) ausgestattet sind, umfassend den Schritt des Messens (M8) eines Eingangsrestspannungssignals $U_0$, das an eine Petersen-Spulen-Steuerung (8) geliefert wird, umfassend einen Schritt des Erfassens eines Zustands des Netzes (1) unter Verwendung einer Resonanzkurve (R), die eine Funktion eines vom Benutzer gegebenen Kompensationsniveaus (K) und des Eingangsrestspannungssignals $U_0$ ist, **dadurch gekennzeichnet, dass** das Verfahren ferner den Schritt des Bestimmens eines Restspannungsschwellenwerts $U_{0TH1}$ für die Erdschlussschutzfunktion von IED ($6_1....6_n$) des Netzes (1) umfasst, der gemäß der Formel berechnet wird:

$$U_{0TH1} = U_{0MAX1} + \Delta U,$$

wo:

- $U_{0MAXI}$ stellt einen geschätzten maximalen Restspannungswert für einen gegebenen Netzzustand dar,
- $\Delta U$ stellt eine vom Benutzer gewählte Sicher-

heitsmarge in Prozenten dar,

und anschließend ein Vergleichsschritt des Restspannungsschwellenwerts $U_{0TH1}$ mit einem vom Benutzer definierten Wert des minimalen Restspannungsschwellenwerts $U_{THMIN}$ durchgeführt wird und gemäß dem Ergebnis des Vergleichs ein Endschwellenwert $U_{FINAL}$ für den Erdschlussschutz in IED ($6_1....6_n$) für den größeren von zwei Werten $U_{0TH1}$ oder $U_{THMIN}$ bestimmt wird.

2. Das Verfahren nach Anspruch 1, **dadurch gekennzeichnet, dass** ein Kommunikationssignal, das über den Wert des Endschwellenwerts $U_{FINAL}$ für den Erdschlussschutz in IED ($6_1....6_n$) informiert, von der Steuerung (8) über ein Kommunikationsnetzwerk (10) an die IED ($6_1....6_n$) gesendet wird und wenn die Restspannung im Netz (1) den Wert $U_{FINAL}$ überschreitet, wird die in IED ($6_1....6_n$) implementierte Erdschlussschutzfunktion ausgeführt und die fehlerhafte Stromleitung der Leitungen ($4_1....4_n$) vom Netz (1) getrennt.

3. Das Verfahren nach Anspruch 1, **dadurch gekennzeichnet, dass** ein Kommunikationssignal, das über den Wert der maximalen Restspannung $U_{0MAX1}$ informiert, über ein Kommunikationsnetzwerk (10) an die IED ($6_1....6_n$ bzw. 6) gesendet wird, wobei der Endschwellenwert $U_{FINAL}$ für den Erdschlussschutz in IED ($6_1....6_n$) berechnet wird und wenn die Restspannung im Netz (1) den Wert $U_{FINAL}$ überschreitet, wird die in IED implementierte Erdschlussschutzfunktion ausgeführt und die fehlerhafte Stromleitung der Leitungen ($4_1...4_n$) vom Netz (1) getrennt.

4. Das Verfahren nach Anspruch 3, **dadurch gekennzeichnet, dass** der Schritt zum Berechnen des Endschwellenwerts $U_{FINAL}$ für den Erdschlussschutz in einer zentralen Schutzeinheit (6) durchgeführt wird.

5. Das Verfahren nach einem der vorhergehenden Ansprüchen, **dadurch gekennzeichnet, dass** die Sicherheitsmargen $\Delta U$ für verschiedene Arten von Netzwerken (1) empfohlen werden und die endgültige Auswahl der $\Delta U$-Werte von den Benutzern bestimmt wird.

6. Ein Computerprogrammprodukt, umfassend einen computerlesbaren Programmcode, der, wenn er auf einer Computervorrichtung ausgeführt wird, die eine Petersen-Spulen-Steuerung (8) ist, oder in einer zentralen Schutzeinheit (6) oder in IED ($6_1....6_n$) für Stromleitungen ($4_1.... 4_n$) ist, die Schritte zur Verbesserung des Erdschlussschutzes in kompensierten Mittelspannungsnetzen (1) durchführt, wobei das Netzwerk (1) durch die Petersen-Spulenvorrichtung (7) geerdet und mit mindestens einer der intelligenten elektronischen Vorrichtungen IED ($6_1....6_n$) als

Schutzvorrichtung für Stromleitungen ($4_1.... 4_n$), ausgestattet ist, umfasst die folgenden Schritte:

- den Schritt des Messens (M8) eines Eingangsrestspannungssignals $U_0$, das an eine Petersen-Spulen-Steuerung (8) geliefert wird,
- den Schritt des Erfassens eines Zustands des Netzwerks (1) unter Verwendung einer Resonanzkurve (R), die eine Funktion eines vom Benutzer vorgegebenen Kompensationsniveaus (K) und eines Eingangsrestspannungssignals $U_0$ ist,
- den Schritt des Bestimmens eines Restspannungsschwellenwerts $U_{0TH1}$ für die Erdschlussschutzfunktion von IED ($6_1....6_n$) des Netzwerks (1), der nach der Formel berechnet wird:

$$U_{0TH1} = U_{0MAX1} + \Delta U,$$

wo:

$U_{0MAX1}$ stellt einen geschätzten maximalen Restspannungswert für einen gegebenen Netzzustand dar,
$\Delta U$ stellt eine vom Benutzer gewählte Sicherheitsmarge in Prozenten dar,

- der Vergleichsschritt des Restspannungsschwellenwerts $U_{0TH1}$ mit einem vom Benutzer definierten Wert des minimalen Restspannungsschwellenwerts $U_{THMIN}$,
- der Schritt des Bestimmens eines Endschwellenwertes $U_{FINAL}$ für den Erdschlussschutz in IED ($6_1....6_n$) für den größeren von zwei Werten $U_{0TH1}$ oder $U_{THMIN}$.

**Revendications**

1. Une méthode d'amélioration de la protection contre les défauts de terre dans les réseaux MT compensés (1) mis à la terre via le dispositif à bobine de Petersen (7) et équipés d'au moins un des dispositifs électroniques intelligents, DEI ($6_1...6_n$), en tant que dispositif de protection des lignes électriques ($4_1....4_n$), comprend l'étape de mesure (M8) d'un signal de tension résiduelle d'entrée $U_0$ délivré à un contrôleur à bobine de Petersen (8), comportant l'étape de détection d'un état du réseau (1) en utilisant une courbe de résonance (R), étant fonction d'un niveau de compensation (K), donné par l'utilisateur, et du signal de tension résiduelle d'entrée $U_0$, **caractérisée en ce que** la méthode comprend en outre l'étape de détermination d'un seuil de tension résiduelle $U_{0TH1}$ pour la fonction de protection contre les défauts de terre des DEI ($6_1....6_n$) du réseau (1) qui est calculé selon la formule :

$$U_{0TH1} = U_{0MAX1} + \Delta U,$$

où :

- $U_{0MAX1}$ représente une valeur de tension résiduelle maximale estimée pour un état de réseau donné,
- $\Delta U$ représente une marge de sécurité en pourcentage sélectionnée par l'utilisateur,

et ensuite une étape de comparaison du seuil de tension résiduelle $U_{0TH1}$ avec une valeur du seuil de tension résiduelle minimal $U_{THMIN}$, définie par l'utilisateur, est réalisée, et en fonction du résultat de la comparaison, un seuil final $U_{FINAL}$ pour la protection contre les défauts de terre dans les DEI ($6_1$.... $6_n$) est déterminé pour la plus grande des deux valeurs $U_{0TH1}$ ou $U_{THMIN}$.

2. La méthode selon la revendication 1, **caractérisée en ce qu'**un signal de communication informant de la valeur du seuil final $U_{FINAL}$ pour la protection contre les défauts de terre dans les DEI ($6_1$...$6_n$) est envoyé par le contrôleur (8) via un réseau de communication (10) aux DEI ($6_1$....$6_n$) et si la tension résiduelle dans le réseau (1) dépasse la valeur $U_{FINAL}$, la fonction de protection contre les défauts de terre mise en œuvre dans les DEI ($6_1$...$6_n$) est exécutée et la ligne électrique défectueuse des lignes ($4_1$....$4_n$) est déconnectée du réseau (1).

3. La méthode selon la revendication 1, **caractérisée en ce qu'**un signal de communication informant de la valeur de la tension résiduelle maximale $U_{0MAX1}$ est envoyé via un réseau de communication (10) aux DEI ($6_1$...$6_n$, ou 6) où le seuil final $U_{FINAL}$ pour la protection contre les défauts de terre dans les DEI ($6_1$....$6_n$) est calculé, et si la tension résiduelle dans le réseau (1) dépasse la valeur $U_{FINAL}$, la fonction de protection contre les défauts de terre mise en œuvre dans les DEI ($6_1$...$6_n$) est exécutée et la ligne électrique défectueuse des lignes ($4_1$...$4_n$) est déconnectée du réseau (1).

4. La méthode selon la revendication 3, **caractérisée en ce que** l'étape de calcul du seuil final $U_{FINAL}$ pour la protection contre les défauts de terre est réalisée dans une unité de protection centrale (6).

5. La méthode selon l'une quelconque des revendications précédentes, **caractérisée en ce que** les marges de sécurité $\Delta U$ sont recommandées pour différents types de réseau (1) et la sélection finale des valeurs $\Delta U$ est déterminée par les utilisateurs.

6. Un produit de programme informatique comprenant un code de programme lisible par ordinateur qui, lorsqu'il est exécuté sur un dispositif informatique étant un contrôleur à bobine de Petersen (8) ou dans l'unité de protection centrale (6) ou dans les DEI ($6_1$....$6_n$) pour les lignes électriques ($4_1$....$4_n$), réalise les étapes d'amélioration de la protection contre les défauts de terre dans les réseaux MT compensés (1), où le réseau (1) est mis à la terre via le dispositif à bobine de Petersen (7) et équipé d'au moins un des dispositifs électroniques intelligents, DEI ($6_1$...$6_n$), en tant que dispositif de protection des lignes électriques ($4_1$....$4_n$), comprend les étapes suivantes :

- l'étape de mesure (M8) d'un signal de tension résiduelle d'entrée $U_0$ délivré à un contrôleur à bobine de Petersen (8),
- l'étape de détection d'un état du réseau (1) à l'aide d'une courbe de résonance (R), étant une fonction d'un niveau de compensation (K), donnée par l'utilisateur, et d'un signal de tension résiduelle d'entrée $U_0$,
- l'étape de détermination d'un seuil de tension résiduelle $U_{0TH1}$ pour la fonction de protection contre les défauts de terre des DEI ($6_1$....$6_n$) du réseau (1) qui est calculé selon la formule :

$$U_{0TH1} = U_{0MAX1} + \Delta U,$$

où :

$U_{0MAX1}$ représente une valeur de tension résiduelle maximale estimée pour un état de réseau donné,

$\Delta U$ représente une marge de sécurité en pourcentage sélectionnée par l'utilisateur,

- l'étape de comparaison du seuil de tension résiduelle $U_{0TH1}$ avec une valeur du seuil de tension résiduelle minimal $U_{THMIN}$, définie par l'utilisateur,
- l'étape de détermination d'un seuil final $U_{FINAL}$ pour la protection contre les défauts de terre dans les DEI ($6_1$...$6_n$) pour la plus grande des deux valeurs $U_{0TH1}$ ou $U_{THMIN}$.

Fig.1

Fig.2

Fig.3

Fig.4

**EP 3 389 157 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0823057 A
- WO 2014021773 A
- WO 9634293 A
- WO 2014194941 A